# EUROPÄISCHE PATENTSCHRIFT

(11) **EP 1 595 830 B1**
(45) Veröffentlichungstag und Bekanntmachung des Hinweises auf die Patenterteilung: **23.07.2008**
(21) Anmeldenummer: 04010551.2
(22) Anmeldetag: 04.05.2004
(51) Int. Cl.: B65G 57/24, B65G 47/51, B65H 33/14

(54) **Anordnung zum Abladen und sortierten Palettieren von Lagen aus blattförmigen Materialien**
Device for discharging and selective palletizing layers of sheetlike materials
Dispositif pour décharger et sélectivement palettiser des couches de matériaux de type feuille

(43) Veröffentlichungstag der Anmeldung: 16.11.2005
(73) Patentinhaber: Adolf Mohr Maschinenfabrik GmbH & Co. KG, 65719 Hofheim am Taunus (DE)
(72) Erfinder: Brinkmann, Werner, 65719 Hofheim (DE); Gross, Helmut, 65719 Hofheim (DE)
(74) Vertreter: Quermann, Helmut

(56) Entgegenhaltungen:
- EP-A- 1 329 401
- EP-A- 1 375 388
- DE-U- 29 823 455

## Beschreibung

Die Erfindung betrifft eine Anordnung zum Abladen von Lagen aus blattförmigen Materialien zur Bildung eines Materialstapels, insbesondere zum Abladen von unterschiedlich bedruckten und/oder unterschiedliche Formate aufweisenden Blattlagen, mit folgenden Merkmalen:
- eine Schneidanlage, die einen Tisch zur Aufnahme der geschnittenen Blattlagen aufweist,
- eine Abladerstation, die einen horizontal und vertikal verfahrbaren Abladertisch aufweist,
- ein Sortierregal zum Zwischenlagern der Blattlagen, wobei das Sortierregal zwischen der Schneidanlage und der Abladerstation angeordnet ist, sowie vertikal verfahrbare, übereinander angeordnete Aufnahmeböden für die Blattlagen aufweist, wobei ferner die Aufnahmeböden des Sortierregals so weit vertikal verfahrbar sind, dass sowohl der unterste als auch der oberste Aufnahmeboden mit seiner jeweiligen Aufnahmefläche für die Blattlagen auf dem Niveau der Aufnahmefläche des Tisches der Schneidanlage platzierbar ist,
- eine Einrichtung zur Aufnahme der vom Abladertisch abgeladenen Blattlagen.

Hintergrund der Erfindung ist das Schneiden von einer Vielzahl identisch bedruckter, gestapelter Sammelbögen, die in der Schneidanlage in Längsrichtung und in aller Regel auch in Querrichtung geschnitten werden. Hierbei fallen Blattlagen, sogenannte Nutzen an, die in Form und/oder Druckinhalt unterschiedlich sind. Die vielen bei den Schnitten erzeugten Blattlagen sind der Weiterverarbeitung zuzuführen und hierbei in aller Regel auch abzustapeln.

Aus der EP 1 329 401 A2 ist eine Anordnung der eingangs genannten Art bekannt. Bei dieser werden die beim Schneiden erzeugten Blattlagen von einer Bedienperson so in das Sortierregal geschoben, dass jeweils gleiche Blattlagen dem gleichen Aufnahmeboden zugeordnet werden, d.h. es werden die diversen Aufnahmeböden des Sortierregals so bewegt, dass der gerade benötigte Aufnahmeboden in Höhe des Tischs der Schneidanlage an diesem anliegt. Diese Vorgänge werden so lange fortgesetzt, bis mindestens ein Aufnahmeboden vollständig beladen oder das Sortierregal insgesamt beladen ist. Die Bedienperson schiebt nun die auf dem jeweiligen Aufnahmeboden befindlichen Blattlagen auf den Abladertisch der Abladerstation und legt sie an einen vorderen, horizontal und vertikal verfahrbaren Anschlag, der sich in Anlegeposition befindet, an. Die Abladerstation fährt in Richtung von zum Abladen vorgesehenen Abstapelpaletten, deren Anzahl der Anzahl der Aufnahmeböden entspricht. Ein weiterer hinterer, vertikal und horizontal verschiebbarer Anschlag positioniert die auf den zugeordneten Aufnahmeböden befindlichen Blattlagen. Parallel dazu bewegt sich der Abladertisch durch vertikale und horizontale Bewegungsabläufe in eine genaue Abstapelposition unmittelbar über die relevante Abstapelpalette bzw. über den bereits auf diese abgelegten Materialstapel. Durch horizontales Bewegen des Abladertisches wird dieser unter den Blattlagen hervorgezogen und in seine Ausgangsstellung verfahren. Der hintere Anschlag hält dabei die Blattlagen zurück, so dass diese auf der Abstapelpalette oder dem darauf bereits befindlichen Materialstapel abgelegt werden. Anschließend verfährt die Abladerstation zurück in ihre Ausgangsposition und der Abladevorgang wird erneut ausgelöst.

Nachteilig ist bei dieser Anordnung, dass die Abstapelpaletten in Reihen angeordnet sind. Demzufolge muss die am weitesten von der Schneidanlage entfernte Abstapelpalette immer als erste und die anderen Abstapelpaletten in der Folge ihres jeweiligen größeren Abstands zur Schneidanlage beschickt werden. Es ist nämlich zu gewährleisten, dass auf der Abstapelpalette, die der Schneidanlage jeweils weiter entfernt ist, ein Stapel gebildet ist, der mindestens genauso hoch ist wie der Stapel, der auf der benachbarten, der Schneidanlage näheren Abstapelpalette gebildet ist, weil sonst der Abladertisch die Blattlagen auf der der Schneidanlage näheren Abstapelpalette nicht abladen kann. Die Flexibilität beim Abladen der Blattlagen ist hierdurch erheblich eingeschränkt.

Von Nachteil ist ferner, dass die Abladerstation nicht mit beliebigen Ebenen des Sortierregals zusammenwirkt. Auch dies trägt erheblich dazu bei, dass der komplexe Abladevorgang - von der Schneidanlage bis zur Einrichtung zur Aufnahme der vom Abladertisch abgeladenen Blattlagen - nicht effizient, insbesondere nicht innerhalb relativ kurzer Zeit erfolgen kann.

Wegen des eingangs beschriebenen Nachteils ist diese Anordnung in der Praxis bereits dahingehend modifiziert worden, dass die jeweilige Abstapelpalette senkrecht zur Längserstreckung der Reihe von Abstapelpaletten verfahrbar ist.

Hiermit ist es nicht mehr erforderlich, die am weitesten von der Schneidanlage befindliche Abstapelpalette immer als erste und die anderen Abstapelpaletten in der Folge ihres jeweils größeren Abstandes zur Schneidanlage zu beschicken.

Insbesondere beim Schneiden von Etiketten ist zu berücksichtigen, dass die Sammelbögen komplex bedruckt sind. Jeder Stapel besteht aus einer Vielzahl von Bögen, die mit Etiketten in unterschiedlicher Anordnung bedruckt sind. Damit werden beim Schneiden eine durchaus große Anzahl von Nutzenstapeln bzw. Blattlagen gebildet. Es ist denkbar, dass beispielsweise zehn Nutzenstapel eine Größe A, zwanzig Nutzenstapel eine Größe B, dreißig Nutzenstapel eine Größe C usw., jeweils bezogen auf die Fläche und Form des jeweiligen Etiketts aufweisen. Dies bedeutet, dass eine höchst unterschiedliche Anzahl von Etikettenstapeln pro geschnittenem Schneidgutgesamtstapel anfallen. Deshalb kommt es auf höchst variables Abladen der Blattlagen an, um eine optimale Weiterverarbeitung zu gewährleisten, beispielsweise in einer nachfolgenden Stanzoperation.

Insbesondere ist zu verhindern, dass das Abladen der Blattlagen im Sortierregal dazu führt, dass während dieses Vorganges die Blattlagen vom Sortierregal nicht dem weiteren Abladevorgang zugeführt werden können, konkret die Abladerstation durch das Arbeiten im Bereich des Sortierregals blockiert ist.

Eine Vorrichtung zum Lagern von Schneidgut unter Verwendung eines Regales ist aus der DE 101 62 367 A1 bekannt. Eine Ablegestation für Etikettenstapel ist in der DE 101 12 338 A1 beschrieben. Eine Abladereinrichtung, die es gleichfalls ermöglicht, Blattlagen unterschiedlicher Druckinhalte abzuladen, ist aus der DE 101 12 171 A1 bekannt. In der EP 0 242 763 A2 ist ein Pufferregal für Blattgutstapel beschrieben.

Aus der US 4 055 261 und der EP 1 061 029 A2 sind Abladerstationen bekannt geworden. Insofern wird auf deren grundsätzliche Funktion verwiesen.

Aufgabe der vorliegenden Erfindung ist, eine Anordnung der eingangs genannten Art so weiter zu bilden, dass mit dieser ein automatisiertes Abladen der Blattlagen bei minimalen Leerzeiten der Anordnung gewährleistet ist.

Gelöst wird die Aufgabe durch eine Anordnung der eingangs genannten Art, die durch folgende Merkmale gekennzeichnet ist:
- der Abladertisch ist derart vertikal verfahrbar, dass seine Aufnahmefläche für die Blattlagen auf dem Niveau der Aufnahmefläche mindestens zweier der Aufnahmeböden des Sortierregals anordbar ist,
- es sind Mittel zum Übergeben der Blattlagen von dem jeweiligen Aufnahmeboden auf den vertikal bezüglich dieses Aufnahmebodens ausgerichteten Abladertisch vorgesehen.

Es kann somit jeder Aufnahmeboden des Sortierregals bezüglich des Niveaus des Tisches der Schneidanlage ausgerichtet werden. Ferner kann der Abladertisch bezüglich seines Niveaus auf das Niveau mindestens zweier der Aufnahmeböden des Sortierregals ausgerichtet werden. Es ermöglicht einen ungehinderten Materialfluss von der Schneidanlage zur Einrichtung für die Aufnahme der vom Abladertisch abgeladenen Blattlagen.

Unter Anordnen einer Fläche "auf dem Niveau" einer anderen Fläche bzw. Ausrichten auf ein bestimmtes "Niveau" wird nicht nur das exakte Ausrichten zweier Flächen auf dieselbe Höhe verstanden, sondern auch ein Ausrichten der Flächen auf ein geringfügig abweichendes Niveau. So wird in aller Regel das Überschieben der jeweiligen Blattlagen von der einen Unterlage zu der dieser benachbarten anderen Unterlagen dahingehend vonstatten gehen, dass die Aufnahmefläche dieser anderen Unterlage auf einem etwas niedrigeren Niveau angeordnet ist als die Aufnahmefläche der Unterlage von der die Blattlage heruntergeschoben wird. Der Vorteil ist darin zu sehen, dass die Blattlagen nicht in einem zwischen den Unterlagen gebildeten geringen Spalt hängen bleiben. Dieser geringe Niveauunterschied, der wie vorstehend beschrieben, unter "auf dem Niveau" subsummiert wird, beträgt beispielsweise 3 bis 4 mm. Demzufolge ist beispielsweise dann, wenn die Aufnahmefläche des Abladertisches auf dem Niveau der Aufnahmefläche eines Aufnahmebodens des Sortierregals platziert ist, die Aufnahmefläche des Abladertisches durchaus 3 mm niedriger positioniert als die Aufnahmefläche des Aufnahmebodens des Sortierregals.

Entsprechend den Erfordernissen kann der jeweilige Aufnahmeboden mit Blattlagen, die beim Schnitt auf der Schneidanlage angefallen sind, beschickt werden. Es muss hierbei nicht Rücksicht genommen werden auf den weiteren Abladeprozess zwischen Sortierregal und Abladertisch bzw. Abladertisch und Einrichtung zur Aufnahme der vom Abladertisch abgeladenen Blattlagen. Wird der eine Aufnahmeboden mit Blattlagen definierter Größe oder definiertem Druckbild der einzelnen Blätter der Blattlage beladen - können demzufolge die auf diesem Aufnahmeboden befindlichen Blattlagen nicht auf den Abladertisch überführt werden - wird der Abladertisch im Bereich des anderen Aufnahmebodens des Sortierregals positioniert und übernimmt dort die auf diesem Aufnahmeboden befindlichen Blattlagen. Der beladene Abladertisch verfährt diese Blattlagen in den Bereich der Einrichtung zur Aufnahme der vom Abladertisch abgeladenen Blattlagen und entlädt die Blattlagen dort. Der Abladertisch fährt dann wieder zum Sortierregal zurück. Zwischenzeitlich ist der andere Aufnahmeboden fertig beladen, so dass die auf diesem Aufnahmeboden befindlichen Blattlagen auf den Abladertisch übernommen werden können. - Es entstehen somit keine Zeitverzögerungen beim Abladen.

Der Abladervorgang ist dadurch weitgehend automatisiert, dass die Mittel zum Übergeben der Blattlagen von dem jeweiligen Aufnahmeboden auf den vertikal bezüglich dieses Aufnahmebodens ausgerichteten Abladertisch vorgesehen sind. In aller Regel wird damit der einzige, manuell ablaufende Vorgang beim Abladen der Blattlagen im Überschieben der Blattlagen von der Schneidanlage auf den jeweiligen Aufnahmeboden zu sehen sein. Grundsätzlich wäre es aber denkbar, auch diese Phase des Abladevorgangs maschinell durchzuführen.

Um ein präzises Ausrichten der Blattlagen im Bereich des jeweiligen Aufnahmebodens zu gewährleisten, sollte dieser einen Anschlag aufweisen. An diesem kann die von der Schneidanlage übergebene Blattlage ausgerichtet werden.

Gemäß einer besonderen Ausführungsform der Erfindung ist vorgesehen, dass der Abladertisch derart vertikal verfahrbar ist, dass seine Aufnahmefläche für die Blattlagen auf dem Niveau der Aufnahmefläche jedes in beliebiger vertikaler Stellung befindlichen Aufnahmebodens des Sortierregals anordbar ist. Dies bedeutet, dass der Abladertisch im Wesentlichen auf das Niveau jedes Aufnahmebodens ausrichtbar ist, unter Berücksichtigung des Umstandes, dass die jeweiligen Aufnahmeböden selbst vertikal verfahrbar sind. Der Abladertisch ist somit nicht, wie vorstehend erörtert, auf nur zwei Aufnahmeböden ausrichtbar, sondern auf alle Aufnahmeböden. Im Falle der Ausrichtung auf zwei Aufnahmeböden, wobei es sich um beliebige zwei Aufnahmeböden der Vielzahl von Aufnahmeböden des Sortierregals handeln kann, ist, um Leerzeiten zu vermeiden, eine präzise Abfolge von Be- und Entladen der beiden Aufnahmeböden im Zusammenwirken mit den Verfahrbewegungen des Abladertischs erforderlich. Ist der Abladertisch hingegen bezüglich aller Aufnahmeböden positionierbar, kann das Be- und Entladen des Aufnahmebodens in einer chaotischen Reihenfolge vonstatten gehen. Der Abladertisch entnimmt beispielsweise von irgendeinem der beladenen Aufnahmeböden die dort befindlichen Blattlagen oder aber es wird der Abladertisch gezielt zu dem Aufnahmeboden gesteuert, der als erster vollständig mit Blattlagen beladen war.

Vorzugsweise sind die Aufnahmeböden in Richtung des Tischs der Schneidanlage horizontal verfahrbar. Dies erleichtert das Überschieben der Blattlagen von der Schneidanlage auf die Aufnahmeböden.

Das Mittel zum Übergeben der Blattlagen von dem jeweiligen Aufnahmeboden auf den Abladertisch ist vorzugsweise als horizontal verfahrbarer Schieber ausgebildet. Es reicht ein Schieber für alle Aufnahmeböden aus, dieser Schieber ist sowohl horizontal als auch vertikal verfahrbar. Es ist beispielsweise eine Einrichtung vorgesehen, die eine vertikal verfahrbare Aufnahme aufnimmt, wobei diese Aufnahme der Lagerung des horizontal verfahrbaren Schiebers dient. Im Zusammenwirken mit der Verfahrbewegung der Aufnahmeböden des Sortierregals und des Abladertisches und der Steuerung der Übernahme der Blattlagen vom jeweiligen Aufnahmeboden auf den Abladertisch wird der Schieber auf das Niveau der zu entladenen Blattlagen verfahren und schiebt diese Blattlagen von dem diesen zugeordneten Aufnahmeboden auf den benachbart dem Aufnahmeboden, auf demselben Niveau platzierten Abladertisch. Die horizontale Verfahrbewegung des Schiebers kann auf unterschiedliche Art und Weise erfolgen, beispielsweise wird der Schieber mittels eines Pneumatikzylinders verfahren. Insbesondere dann, wenn zum Verfahren des Schiebers Lösungen erforderlich sind, die weniger Platz benötigen, kann es sich anbieten, den Schieber in einer Schere, einem Teleskop, einer Schubkette usw. zu lagern. Dies ermöglicht eine recht kurze Ausführung der Schieberanordnung, so dass dort Platz frei wird, um beispielsweise das zu schneidende Gut über einen Hintertisch der Schneidanlage zu beschicken.

Der Schieber ist in seiner ausgefahrenen Endstellung insbesondere im Bereich des Abladertischs angeordnet. Hierdurch ist sichergestellt, dass die Blattlagen vollständig von dem diesen zugeordneten Aufnahmeboden auf den Abladertisch übergeschoben sind. Vorzugsweise sind Mittel zum Zurückhalten der auf dem Abladertisch liegenden Blattlagen beim Verfahren des Abladertischs in Richtung des Sortierregals vorgesehen.

Die Einrichtung zur Aufnahme der vom Abladertisch abgeladenen Blattlagen ist insbesondere durch mehrere Abstapelpaletten gebildet. Die auf dem jeweiligen Aufnahmeboden gestapelten Blattlagen gleichen Formats bzw. gleichen Druckbilds werden vom Abladertisch übernommen und dann auf eine definierte Abstapelplatte abgeladen, die für die Aufnahme der Blattlagen mit einem solchen Format bzw. einem solchen Druckbild vorgesehen ist. Ist im nächsten Zyklus dieser Aufnahmeboden wieder mit den definierten Blattlagen beladen worden, werden diese mittels des Abladertischs auf den bereits auf der definierten Abstapelpalette angeordneten Blattlagen abgelegt, bis sich ein Gesamtstapel bildet, der mittels der Abstapelpalette abtransportiert werden kann. Entsprechend werden die anderen Abstapelpaletten mit Blattlagen definierten Formats und/oder definierten Druckbilds der einzelnen Blätter belegt.

Gemäß einer besonderen Weiterbildung der Erfindung ist eine Vorrichtung zum umlaufenden Verfahren der Einrichtung, die der Aufnahme der vom Abladertisch abgeladenen Blattlagen dient, vorgesehen. Diese Gestaltung beinhaltet den großen Vorteil, dass das Abladen der Blattlagen auf den Abstapelpaletten beliebig erfolgen kann. Es muss keine Reihenfolge der Entladung der Aufnahmeböden und demzufolge der Beladung der Abstapelpaletten eingehalten werden. Ist ein Aufnahmeboden vollständig mit Blattlagen beschickt, können die Blattlagen unmittelbar auf den Abladertisch überführt werden, der diese auf der zugeordneten Abstapelpalette absetzt, die mittels der Vorrichtung in die benachbarte Position zum Abladertisch bewegt worden ist. Es ist somit ein chaotisches Abladen auch im Bereich der Vorrichtung möglich, und dies insbesondere auf kürzerem Weg zwischen Abladertisch und Vorrichtung.

Die Vorrichtung zum umlaufenden Verfahren der Einrichtung, die der Aufnahme der vom Abladertisch abgeladenen Blattlagen dient, kann auf unterschiedlichste Art und Weise gestaltet sein. Es wird als besonders vorteilhaft angesehen, wenn diese Vorrichtung als um eine vertikale Achse drehbares Karussell ausgebildet ist. Eine andere denkbare Gestaltung sieht beispielsweise vor, dass zwei Kettenräder vorgesehen sind, die eine in eine umlaufende Bewegung versetzbare, horizontal angeordnete Kette aufnehmen, an der die Einrichtung zur Aufnahme der von dem Abladertisch abgeladenen Blattlagen befestigt ist. Auch diese Gestaltung nimmt relativ wenig Bauraum ein und gewährleistet, dass die jeweilige Einrichtung zur Aufnahme der von dem Abladertisch abgeladenen Blattlagen schnell und einfach in eine zum Abladertisch benachbarte Position überführt werden kann.

Diese beliebige Ablademöglichkeit, nicht nur zwischen den Aufnahmeböden und dem Abladertisch, sondern auch zwischen dem Abladertisch und den Abstapelpaletten, gestattet einen örtlich unabhängigen und zeitlich unabhängigen Abladevorgang. Es entstehen beim Abladen keine Stillstandszeiten, die Taktfrequenz und das Entladevolumen ist im Vergleich zu den Anordnungen gemäß dem Stand der Technik wesentlich optimiert.

Weitere Merkmale der Erfindung sind in der Unteransprüchen, der Beschreibung der Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand einer Ausführungsform beispielsweise dargestellt, ohne auf diese beschränkt zu sein. Es zeigt in stark vereinfachter Darstellung:
- Figur 1: eine Draufsicht der Anordnung zum Abladen von Lagen aus blattförmigen Materialen zur Bildung eines Materialstapels,
- Figur 2: einen Schnitt durch die in Figur 1 gezeigte Anlage gemäß der Linie II-II,
- Figur 3: einen Schnitt durch die in Figur 1 gezeigte Anlage gemäß der Linie III-III und
- Figur 4: eine Detailansicht des Karussells mit einer Abstapelpalette, in Blickrichtung des Pfeils IV in Figur 2 gesehen.

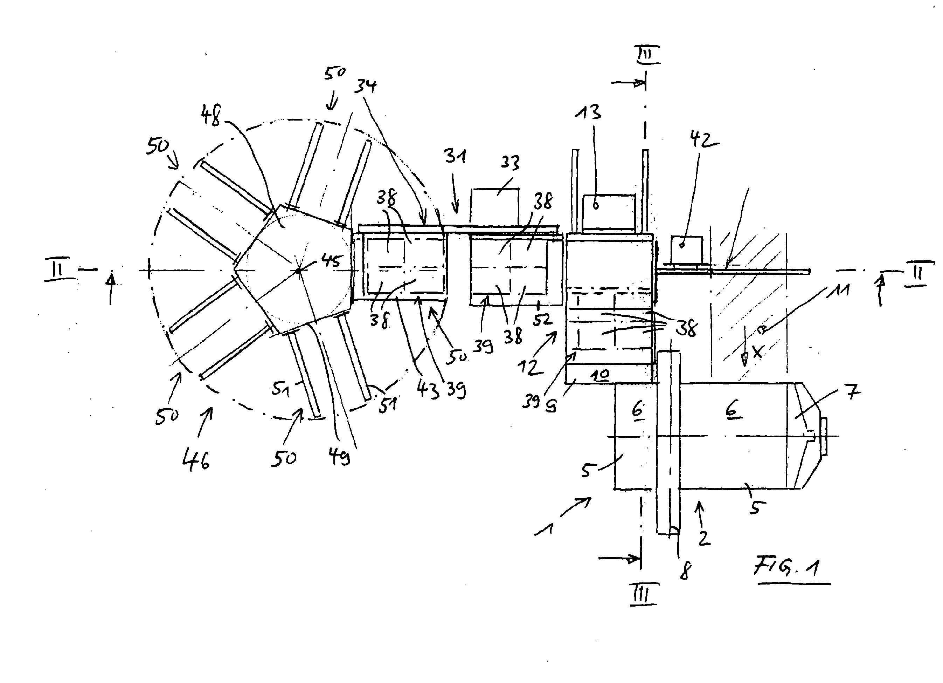

Die Anordnung weist zunächst eine in bekannter Art und Weise ausgebildete Schneidanlage 1 auf. Sie besteht im wesentlichen aus einer Schneidmaschine 2, die ein Grundgestell 3 und einen in diesem gelagerten Portalrahmen 4 aufweist. Ein Tisch 5 der Schneidmaschine 2 dient der Aufnahme des Schneidguts, das aus blattförmigen Materialien gebildet ist. Die Tischoberfläche ist mit der Bezugsziffer 6 bezeichnet. Eine im Bereich des hinteren Tischteils angeordneter Vorschubsattel 7 dient dem Vorschieben des zu schneidenden Gutes, das sich auf dem hinteren Teil des Tisches 5 befindet, hinter der Schneidebene 8, die sich senkrecht zu der Blattebene des Zeichnungsblatts der Figur 1 erstreckt. Das nicht dargestellte Schneidmesser ist im Portalrahmen 4 gelagert, hinter dem Schneidmesser befindet sich ein nicht dargestellter Pressbalken zum Niederdrücken des zu schneidenden Guts, der gleichfalls im Portalrahmen 4 gelagert ist. Das geschnittene Gut ist demzufolge auf dem vorderen Teil des Tisches 5 platziert, somit auf der dem Vorschubsattel 7 abgewandten Seite der Schneidebene 8. Mit dem vorderen Tischteil des Tisches 5 ist seitlich ein Seitentisch 9 verbunden, dessen Tischoberfläche 10 niveaugleich der Tischoberfläche 6 ist. Die Beschickung des hinteren Tischteils des Tisches 5 erfolgt beispielsweise von hinten über ein weiteres seitliches Tischteil 11 in Richtung des Pfeiles X.

Der auf das hintere Tischteil des Tisches 5 überführte Gesamtstapel wird mittels des Vorschubsattels 7 vorgeschoben und mittels des Schneidmessers der Schneidmaschine 2 mehrfach quer zu seiner Vorschubrichtung geschoben, entsprechend den gewünschten Schnittabfolgen. Anschließend wird der zerteilte Gesamtstapel um 90° gedreht und gegen den zurückgefahrenen Vorschubsattel 7 angelegt. Nun wird der bereits in der einen Richtung geschnittene Gesamtstapel senkrecht zu diesen Schnitten geschnitten, so dass der Gesamtstapel in eine Vielzahl von Blattlagen 38, die sich als Nutzenstapel darstellen, unterteilt ist. Entsprechend dem Druckbild der einzelnen Blätter des Gesamtstapels und den aufgedruckten Formaten ergeben sich unterschiedlich bedruckte und/oder unterschiedliche Formate aufweisende Blattlagen 38, die weiter zu verarbeiten sind, beispielsweise zu stanzen sind.

Neben der Schneidmaschine 2 befindet sich ein Sortierregal 12. Dieses weist einen Ständer 13 auf, der einen vertikal verfahrbaren Schlitten 14 aufnimmt. In dem verfahrbaren Schlitten 14 sind fünf Aufnahmeböden 21, 22, 23, 24, 25 horizontal verfahrbar gelagert. Jeder Aufnahmeboden weist ein Bodenteil 26 auf, dessen obere Fläche 27 der Aufnahme von Blattlagen dient, ferner ist mit dem der Schneidmaschine 2 abgewandten Ende des Bodenteils 26 ein vertikaler Anschlag 28 verbunden, an dem Führungsstangen 29 angreifen, die der Lagerung dieses Aufnahmebodens im Schlitten 14 dienen. Stellmittel zum vertikalen Verfahren des Schlittens 14 und dem horizontalen Verfahren der Aufnahmeböden 21 bis 25 sind nicht näher veranschaulicht. Es handelt sich beispielsweise um Pneumatikzylinder oder elektrisch betätigte Spindelantriebe.

In der eingefahrenen Position sind die Aufnahmeböden 21 bis 25 mit ihren Anschlägen 28 benachbart dem Schlitten 14 angeordnet. In dieser Position befinden sich die Aufnahmeböden übereinander. Die Aufnahmeböden lassen sich mittels des Schlittens 14 so weit nach unten verfahren, dass der unterste Aufnahmeboden 21 geringfügig oberhalb des Bodens 30, der die erfindungsgemä-βe Anordnung insgesamt aufnimmt, angeordnet ist. In dieser maximal abgesenkten Position des Aufnahmebodens 21 befindet sich die Fläche 27 des obersten Aufnahmebodens 25 auf einem Niveau mit den Tischoberflächen 10 und 6. In der gleichfalls in dieser Figur mit eingezeichneten obersten Position des Schlittens 14 befindet sich die Fläche 27 des untersten Aufnahmebodens 21 auf Höhe der Tischoberflächen 10 und 6, der oberste Aufnahmeboden 25 befindet sich deutlich oberhalb der Tischoberfläche 10.

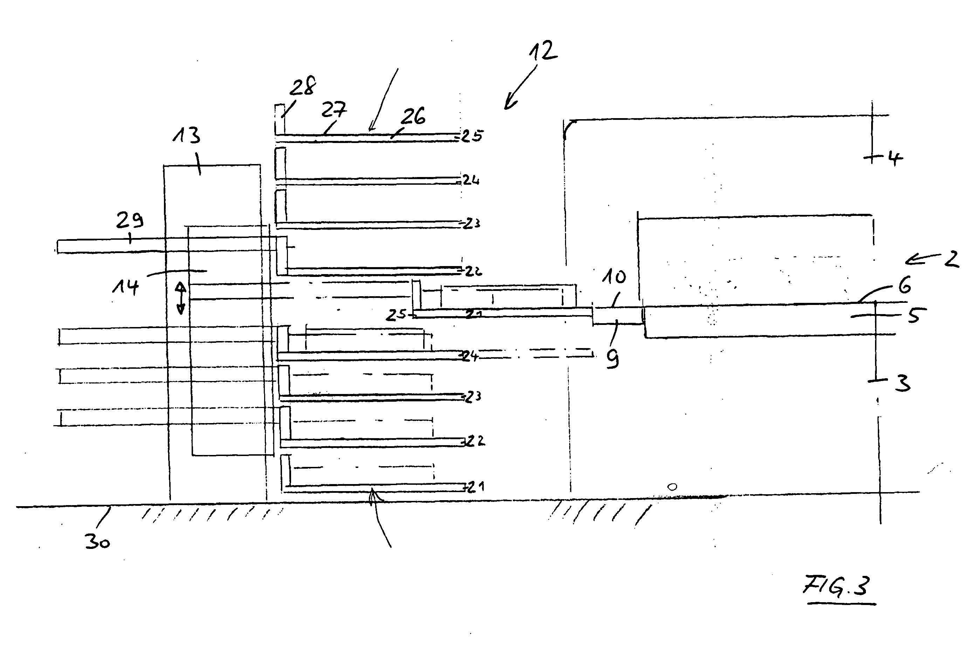

Für die beiden Extrempositionen des Schlittens 14 ist in der Figur 3 die ausgefahrene Stellung von Aufnahmeboden 21 und Aufnahmeboden 25 veranschaulicht. Hierbei ist das Bodenteil 26 unmittelbar benachbart dem Seitentisch 9 positioniert, so dass die Blattlagen vom Tisch 5 der Schneidmaschine 2 über den Seitentisch 9 auf den auf Niveau dieser Tische positionierten Aufnahmeboden überführt werden können. Ist der Aufnahmeboden vollständig beladen, wird er in Richtung des Schlittens 14 eingezogen, so dass er aus dieser Position heraus entladen werden kann.

Diese Entladung erfolgt horizontal und in einer Richtung senkrecht zur Einfahrrichtung des Aufnahmebodens.

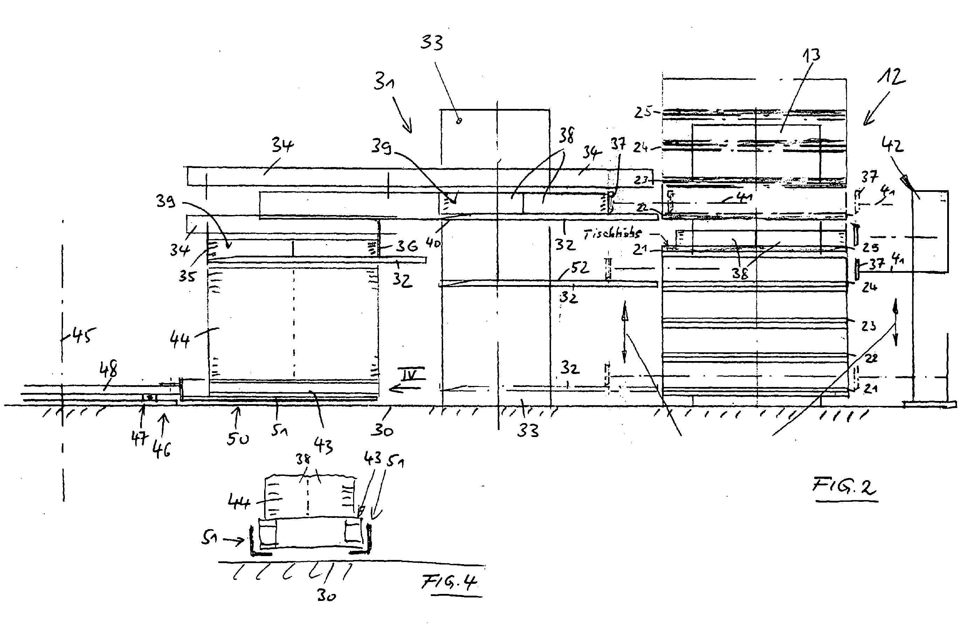

Bezogen auf die genannte Entladerichtung des Aufnahmebodens befindet sich neben dem Sortierregal 12 die Abladerstation 31, die einen horizontal und vertikal verfahrbaren Abladertisch 32 aufweist. Dieser ist jeweils in mehreren Verfahrstellungen veranschaulicht. Die Abladerstation 31 weist einen auf dem Boden 30 ruhenden Ständer 33 auf, der in einem nicht näher veranschaulichten vertikal verfahrbaren Schlitten einen horizontalen Träger 34 aufnimmt. In dem Träger 34 ist der Abladertisch 32 horizontal verfahrbar gelagert. Der in Figur 2 in zwei unterschiedlichen vertikalen Stellungen gezeigte Träger 34 nimmt ferner horizontal und vertikal verfahrbare Anschläge 35 und 36 zum Positionieren der Blattlagen 38 , die sich jeweils auf dem Abladertisch 32 befinden, auf.

Figur 2 veranschaulicht zunächst das Entladen des in maximal angehobener Position befindlichen Aufnahmebodens 22. Dieser ist beispielsweise mit einer Vielzahl von Blattlagen, im konkreten Ausführungsbeispiel mit vier quaderförmigen Blattlagen 38 eines bestimmten bedruckten Formats beschickt. Nach der Beschickung ist er, vom Beladeniveau "Tischhöhe" gemäß Figur 2, das das Niveau der Tischflächen 6 und 10 darstellt, auf seine maximal angehobene Position verfahren worden. Während nun der Aufnahmeboden 21 auf das Niveau "Tischhöhe" angehoben ist und mit Blattlagen 38 seitens der Schneidmaschine 2 beschickt wird, wird der Abladertisch 32 auf Höhe des Niveaus des Aufnahmebodens 22 verfahren und in unmittelbarer Nähe zum Aufnahmeboden 22 platziert. Es werden dann die auf dem Aufnahmeboden 22 gesammelten Blattlagen mittels eines Schiebers 37, der in den unterschiedlichsten Positionen dargestellt ist, vom Aufnahmeboden 22 vollständig auf den Abladertisch 32 übergeschoben, und zwar soweit bis die vordere Fläche des aus den vier Blattlagen 28 gebildeten Stapels 39 vorne mit dem spitzen Endabschnitt 40 des Abladertischs 32 abschließt. Der Schieber 37 ist in einer langen, horizontal angeordneten Stange 41 gelagert, die in einem nicht näher gezeigten Schlitten gelagert ist, der vertikal verfahrbar in einem auf dem Boden 30 stehenden Ständer 42 aufgenommen ist. Mittel zum horizontalen Verfahren des Schiebers sind nicht mit veranschaulicht, hierbei kann es sich um einen Pneumatikzylinder handeln, oder aber auch um eine Scherenanordnung, ein Teleskop, eine Schubkette usw.. Gleichfalls nicht veranschaulicht sind die Mittel zum vertikale Verfahren des Schlittens, der die Stange 41 aufnimmt.

Im konkreten Ausführungsbeispiel ist gezeigt, dass der Schieber, bezogen auf die vollständig abgesenkte Position des Schlittens 14 des Sortierregals 12, im Bereich aller Aufnahmeböden 21 bis 25 wirksam ist, während, bezogen auf die vollständig angehobene Position des Schlittens 14 des Sortierregals 12 der Schieber 37 nur im Bereich der Aufnahmeböden 2 und 22 wirksam ist. In aller Regel reicht eine solche Flexibilität bezüglich der Anordnung des Schiebers 37 aus, um ein Abladen ohne Stillstandszeiten zu bewerkstelligen. Grundsätzlich könnte die vertikale Bewegbarkeit des dem Ständer 42 zugeordneten Schlittens nach oben vergrößert werden, so dass auch die in oberer Position befindlichen Aufnahmeböden 23 bis 25 für den Schieber 37 zugänglich sind.

Entsprechend der beschriebenen vertikalen Verfahrbarkeit des Schiebers 37 ist der Abladertisch 32 vertikal verfahrbar. Wie zur Modifizierung beschrieben könnte der Abladertisch 32 noch weiter nach oben verfahren werden, so dass der Schieber 37 auch Blattlagen von dem in der obersten Position befindlichen Aufnahmeboden 25 auf den Abladertisch 32 überschieben kann.

Figur 2 veranschaulicht weitere Positionen des Abladertisches 32, nämlich, bezogen auf die vollständig abgesenkte Position des Schlittens 14 des Sortierregals 12, eine Position des Abladertischs 32 benachbart dem Aufnahmeboden 21 bzw. benachbart dem Aufnahmeboden 24. Mit veranschaulicht ist jeweils die eingezogene und ausgefahrene Stellung des Schiebers 37.

Der Stapel 39 wird beim Überschieben auf den Abladertisch 32 gegen den nach unten gefahrenen Anschlag 35 positioniert und der weitere Anschlag 36 gegen das hintere Ende des Stapels 39 nach unten bewegt, so dass der Stapel 39 zwischen den beiden Anschlägen 35 und 36 positioniert ist. Dann wird der Abladertisch bei Positionierung des Stapels 39 durch die Anschläge 35 und 36, wie gezeigt, in den Bereich oberhalb des auf einer Abstapelpalette 43 bereits gebildeten Stapels 44 aus einzelnen Blattlagen 38 verfahren, wobei der Abladertisch 32 geringfügig oberhalb des Stapels 44 platziert ist. Die vordere Fläche des Stapels 39 wird bezüglich der vorderen Fläche des Stapels 44 ausgerichtet, anschließend der Abladertisch 32 in Richtung des Sortierregals 12 zurückgefahren, so dass, da der Anschlag 26 auf dem Stapel 29 einwirkt, dieser zurückgehalten wird und im wesentlichen kantengenau auf dem Stapel 44 abgelegt wird.

Auf der Abstapelpalette 43 werden immer diejenigen Stapel 39 abgelegt, die zuvor auf dem Aufnahmeboden 32 platziert waren. Blattlagen 38, die auf dem Aufnahmeboden 21 platziert waren und demzufolge ein anderes Format und/oder anderes Druckbild aufweisen, werden auf eine anderen Abstapelpalette abgestapelt, die dem Aufnahmeboden 23 zugeordneten Blattlagen 38 wiederum auf einer anderen Abstapelpalette usw..

Die Figuren 1 und 2 zeigen die Ausbildung eines um eine vertikale Achse 45 drehbaren Karussells 46. Dieses weist einen auf dem Boden 30 aufliegenden Drehkranz 47 auf, wobei der obere Drehkranzkörper 48, in vertikaler Projektion gesehen, die Form eines Fünfecks aufweist. Im Bereich jeder Seite 49 des Fünfecks ist mit dem Drehkranzkörper 48 eine Gabel 50, die zwei Zinken 51 aufweist, verbunden. Jeder Zinken ist L-förmig ausgebildet, mit aufeinander zugerichteten unteren Schenkeln. Diese dienen der Aufnahme der jeweiligen Abstapelpalette 43, somit der fünf Abstapelpaletten 43, die den fünf Aufnahmeböden 21 bis 25 zugeordnet sind.

Durch Drehung des Karussells 46 über einen nicht näher veranschaulichten Stellantrieb kann jeweils diejenige Abstapelpalette 43 in die Position benachbart der Abladerstation 31 gedreht werden, die den zu entladenen Aufnahmeboden zugeordnet ist. Die für den jeweiligen Abladervorgang nicht benötigte Abstapelpalette kann, sofern sie vollständig beladen ist, entnommen und durch eine nicht beladene neue Abstapelpalette ersetzt werden.

## Patentansprüche

1. Anordnung zum Abladen von Lagen (38) aus blattförmigen Materialien zur Bildung eines Materialstapels (44), insbesondere zum Abladen von unterschiedlich bedruckten und/oder unterschiedliche Formate aufweisenden Blattlagen (38), mit folgenden Merkmalen:
- einer Schneidanlage (1), die einen Tisch (9) zur Aufnahme der geschnittenen Blattlagen (38) aufweist,
- einer Abladerstation (31), die einen horizontalen und vertikal verfahrbaren Abladertisch (32) aufweist,
- einem Sortierregal (12) zum Zwischenlagern der Lagen (38), wobei das Sortierregal (12) zwischen der Schneidanlage (1) und der Abladerstation (31) angeordnet ist sowie vertikal verfahrbare, übereinander angeordnete Aufnahmeböden (21 bis 25) für die Lagen (38) aufweist, wobei ferner die Aufnahmeböden (21 bis 25) des Sortierregals (12) soweit vertikal verfahrbar sind, dass sowohl der unterste (21) als auch der oberste (25) Aufnahmeboden mit seiner jeweiligen Aufnahmefläche (27) für die Blattlagen (38) auf dem Niveau der Aufnahmefläche (6, 10) des Tischs (5, 9) der Schneidanlage (1) platzierbar ist,
- einer Einrichtung (43) zur Aufnahme der vom Abladertisch (31) abgeladenen Blattlagen (38),
**gekennzeichnet durch** folgende Merkmale:
- der Abladertisch (32) ist derart vertikal verfahrbar, dass seine Aufnahmefläche (52) für die Blattlagen (38) auf dem Niveau der Aufnahmefläche (27) mindestens zweier der Aufnahmeböden (21 bis 25) des Sortierregals (12) anordbar ist,
- es sind Mittel (37) zum Übergeben der Blattlagen (38) von dem jeweiligen Aufnahmeboden auf den vertikal bezüglich dieses Aufnahmebodens ausgerichteten Abladertisch (32) vorgesehen.

2. Anordnung nach Anspruch 1, **dadurch gekennzeichnet, dass** die Aufnahmeböden (21 bis 25) in Richtung des Tischs (5, 10) der Schneidanlage (1) horizontal verfahrbar sind.

3. Anordnung nach Anspruch 1 oder 2, **dadurch gekennzeichnet, dass** der jeweilige Aufnahmeboden einen Anschlag (28) zum Ausrichten der Blattlagen (38) beim Übergeben von der Schneidanlage (1) aufweist.

4. Anordnung nach einem der Ansprüche 1 bis 3, **dadurch gekennzeichnet, dass** der Abladertisch (32) derart vertikal verfahrbar ist, dass seine Aufnahmefläche (52) für die Blattlagen (38) auf dem Niveau der Aufnahmefläche (27) jedes in beliebiger vertikaler Stellung befindlichen Aufnahmebodens (21 bis 25) des Sortierregals (12) anordbar ist.

5. Anordnung nach einem der Ansprüche 1 bis 4, **dadurch gekennzeichnet, dass** das Mittel (37) zum Übergeben der Blattlagen (38) von dem jeweiligen Aufnahmeboden auf den Abladertisch (32) als horizontal verfahrbarer Schieber (37) ausgebildet ist.

6. Anordnung nach Anspruch 5, **dadurch gekennzeichnet, dass** der Schieber (37) in seiner ausgefahrenen Endstellung im Bereich des Abladertischs (32) angeordnet ist.

7. Anordnung nach Anspruch 5 oder 6, **dadurch gekennzeichnet, dass** eine Einrichtung (42) vorgesehen ist, die eine vertikal verfahrbare Aufnahme aufnimmt, wobei diese Aufnahme der Lagerung des horizontal verfahrbaren Schiebers (37) dient.

8. Anordnung nach einem der Ansprüche 1 bis 7, **dadurch gekennzeichnet, dass** Mittel (36) zum Zurückhalten der auf dem Abladertisch (32) liegenden Blattlagen (38) beim Verfahren des Abladertischs (32) in Richtung des Sortierregals (12) vorgesehen sind.

9. Anordnung nach einem der Ansprüche 1 bis 8, **dadurch gekennzeichnet, dass** die Einrichtung (43) zur Aufnahme der vom Abladertisch (32) abgeladenen Blattlagen (38) durch mehrere Abstapelpaletten (43) gebildet ist.

10. Anordnung nach Anspruch 9, **dadurch gekennzeichnet, dass** eine Vorrichtung (46) zum umlaufenden Verfahren der Einrichtung (43), die der Aufnahme der vom Abladertisch (31) abgeladenen Blattlagen (38) dient, vorgesehen ist.

11. Anordnung nach Anspruch 10, **dadurch gekennzeichnet, dass** die Vorrichtung (46) als um eine vertikale Achse (45) drehbares Karussell (46) ausgebildet ist.

## Claims

1. Arrangement for discharging layers (38) of sheet materials in order to form a material stack (44), in particular for discharging layers of sheets (38) that are printed differently and/or have different formats, having the following features:
- a cutting system (1), which has a table (9) in order to hold the cut layers of sheets (38),
- a discharge station (31), which has a discharge table (30) that can be moved horizontally and vertically,
- a sorting rack (12) for the intermediate storage of the layers (38), the sorting rack (12) being arranged between the cutting system (1) and the discharge station (31), and also having holding trays (21 to 25) for the layers (38), which holding trays can be moved vertically and are arranged one above another, in addition the holding trays (21 to 25) of the sorting rack (12) being movable vertically to such an extent that both the lowermost (21) and the uppermost (25) holding tray can be placed with its respective holding surface (27) for the layers of sheets (38) at the level of the holding surface (6, 10) of the table (5, 9) of the cutting system (1),
- equipment (43) for holding the layers of sheets (38) discharged from the discharge table (31),
**characterized by** the following features:
- the discharge table (32) can be moved vertically in such a way that its holding surface (52) for the layers of sheets (38) can be arranged at the level of the holding surface (27) of at least two of the holding trays (21 to 25) of the sorting rack (12),
- means (37) are provided for transferring the layers of sheets (38) from the respective holding tray to the discharge table (32) aligned vertically with respect to this holding tray.

2. Arrangement according to Claim 1, **characterized in that** the holding trays (21 to 25) can be moved horizontally in the direction of the table (5, 10) of the cutting system (1).

3. Arrangement according to Claim 1 or 2, **characterized in that** the respective holding tray has a stop (28) for aligning the layers of sheets (38) as they are transferred from the cutting system (1).

4. Arrangement according to one of Claims 1 to 3, **characterized in that** the discharge table (32) can be moved vertically in such a way that its holding surface (52) for the layers of sheets (38) can be arranged at the level of the holding surface (27) of each holding tray (21 to 25) of the sorting rack (12) that can be located in any desired vertical position.

5. Arrangement according to one of Claims 1 to 4, **characterized in that** the means (37) for transferring the layers of sheets (38) from the respective holding tray to the discharge table (32) is constructed as a slide (37) that can be moved horizontally.

6. Arrangement according to Claim 5, **characterized in that**, when it is in its extended end position, the slide (37) is arranged in the region of the discharge table (32).

7. Arrangement according to Claim 5 or 6, **characterized in that** a device (42) is provided which accommodates a holder that can be moved vertically, this holder being used to mount the slide (37) that can be moved horizontally.

8. Arrangement according to one of Claims 1 to 7, **characterized in that** means (36) are provided for holding back the layers of sheets (38) lying on the discharge table (32) as the discharge table (32) is moved in the direction of the sorting rack (12).

9. Arrangement according to one of Claims 1 to 8, **characterized in that** the equipment (43) for holding the layers of sheets (38) discharged from the discharge table (32) is formed by a plurality of stacking pallets (43).

10. Arrangement according to Claim 9, **characterized in that** a device (46) is provided for the revolving movement of the equipment (43) which is used to hold the layers of sheets (38) discharged from the discharge table (31).

11. Arrangement according to Claim 10, **characterized in that** the device (46) is constructed as a carousel (46) that can rotate about a vertical axis (45).

## Revendications

1. Système de déchargement de couches (38) en matériau en forme de feuilles pour former une pile de matériau (44), en particulier pour décharger des couches (38) de pages qui sont imprimées différemment et/ou présentent des formats différents, lequel système présente les caractéristiques suivantes :
- une installation de découpe (1) qui présente une table (9) de réception des couches découpées (38) de pages,
- un poste de déchargement (31) qui présente une table de déchargement (32) qui peut être déplacée horizontalement et verticalement,
- une étagère de tri (12) qui permet d'entreposer temporairement les couches (38), l'étagère de tri (12) étant disposée entre l'installation de découpe (1) et le poste de déchargement (31) et présentant des fonds (21 à 25) de réception des couches (38), lesquels fonds étant disposés les uns au-dessus des autres et pouvant être déplacés verticalement, les fonds de réception (21 à 25) et l'étagère de tri (12) pouvant en outre être déplacés verticalement jusqu'à ce que la surface (27) de réception des couches (38) de pages tant du fond inférieur (21) que du fond supérieur (25) de réception puisse être placée au niveau de la surface de réception (6, 10) de la table (5, 9) de l'installation de découpe (1),
- un dispositif (43) de réception des couches (38) de pages déchargées de la table de déchargement (31),
**caractérisé par** les caractéristiques suivantes :
- la table de déchargement (32) peut être déplacée verticalement de telle sorte que sa surface (52) de réception des couches (38) de pages puisse être placée au niveau de la surface de réception (27) d'au moins deux des fonds de réception (21 à 25) de l'étagère de tri (12),
- des moyens (37) sont prévus pour transmettre les couches (38) de pages depuis le fond de réception concerné jusqu'à la table de déchargement (32) alignée verticalement par rapport à ce fond de réception.

2. Système selon la revendication 1, **caractérisé en ce que** les fonds de réception (21 à 25) peuvent être déplacés horizontalement dans la direction de la table (5, 10) de l'installation de découpe (1).

3. Système selon les revendications 1 ou 2, **caractérisé en ce que** chaque fond de réception présente une butée (28) qui aligne les couches (38) de pages lorsqu'elles sont transférées depuis l'installation de découpe (1).

4. Système selon l'une des revendications 1 à 3, **caractérisé en ce que** la table de déchargement (32) peut être déplacée à la verticale de telle sorte que sa surface (52) de réception des couches (38) de pages puisse être disposée au niveau de la surface de réception (27) de chaque fond de réception (21 à 25) situé dans une position verticale quelconque dans l'étagère de tri (12).

5. Système selon l'une des revendications 1 à 4, **caractérisé en ce que** le moyen (37) qui transfère les couches (38) de pages depuis le fond de réception concerné jusque sur la table de déchargement (32) est configuré comme coulisseau (37) apte à être déplacé horizontalement.

6. Système selon la revendication 5, **caractérisé en ce que** le coulisseau (37) est disposé dans la zone de la table de déchargement (32) lorsqu'il est en position d'extrémité de sortie.

7. Système selon les revendications 5 ou 6, **caractérisé en ce qu'**il présente un dispositif (42) qui reprend un logement apte à être déplacé verticalement, ce logement servant à monter le coulisseau (37) apte à être déplacé horizontalement.

8. Système selon l'une des revendications 1 à 7, **caractérisé en ce qu'**il présente des moyens (36) qui retiennent les couches (38) de pages situées sur la table de déchargement (32) lorsque la table de déchargement (32) est déplacée en direction de l'étagère de tri (12).

9. Système selon l'une des revendications 1 à 8, **caractérisé en ce que** le dispositif (43) de réception des couches (38) de pages déchargées de la table de déchargement (32) est formé par plusieurs palettes d'empilement (43).

10. Système selon la revendication 9, **caractérisé en ce qu'**il présente un dispositif (46) qui permet de déplacer circulairement le dispositif (43) qui sert à reprendre les couches (38) de pages déchargées de la table de déchargement (31).

11. Système selon la revendication 10, **caractérisé en ce que** le dispositif (46) est configuré comme tourelle (46) apte à tourner autour d'un axe vertical (45).
